# EUROPÄISCHE PATENTSCHRIFT

(11) **EP 2 319 327 B1**
(45) Veröffentlichungstag und Bekanntmachung des Hinweises auf die Patenterteilung: **20.02.2019**
(21) Anmeldenummer: 10014334.6
(22) Anmeldetag: 05.11.2010
(51) Int. Cl.: A22C 13/00, B29C 61/02, B29C 53/08

(54) **KRANZHÜLLE MIT GLEICHFÖRMIGER DICKE UND VERFAHREN ZU DEREN HERSTELLUNG**
RIM CASING WITH UNIFORM THICKNESS AND METHOD FOR PRODUCING SAME
ENVELOPPE COURONNÉE DOTÉE D'UNE ÉPAISSEUR DE FORME HOMOGÈNE ET SON PROCÉDÉ DE FABRICATION

(30) Priorität: 06.11.2009 DE 102009053227
(43) Veröffentlichungstag der Anmeldung: 11.05.2011
(73) Patentinhaber: Podanfol S.A., 64-800 Chodziez (PL)
(72) Erfinder: Auf der Heide, Christian, 49080 Osnabrück (DE)
(74) Vertreter: Lenzing Gerber Stute

(56) Entgegenhaltungen:
- EP-A1- 0 050 702
- EP-B1- 0 846 547
- EP-B1- 1 438 177

## Beschreibung

Die vorliegende Erfindung betrifft eine Kranzhülle mit gleichförmiger Dicke und ein Verfahren zu deren Herstellung.

### Stand der Technik:

Zulieferer von Hilfsstoffen der Wurstwarenhersteller in der Lebensmittelindustrie stellen heute kranzförmig gebogene Nahrungsmittelhüllen aus Polyamid und anderen Stoffen her. Verschieden Verfahren zur Herstellung solcher Kranzdärme sind bekannt, beispielsweise aus der DE19650873A1.

Zunächst wird ein gerader, ein- oder mehrschichtiger Polymerhüllenschlauch extrudiert. Bei den verwendeten schrumpffähigen Materialien handelt es sich um biaxial verstreckte ein- oder mehrschichtige Hüllen aus orientiertem Polyamid (oPA) oder um unverstreckte ein- oder mehrschichtige Hüllen aus unverstrecktem Polyamid (uPA) oder andere Polyamiden auch kombiniert im Schichtaufbau.

Es entsteht ein flachgelegter Schlauch auf Rolle. Im weiteren Verfahrensschritt wird die Hülle dann mit bekannten Verfahren (EP846547B1) zu einer Kranzhülle thermoplastisch verformt.

Alle so gefertigten Polymerhüllen-Kranzdärme weisen ein messbar eindeutig ungleichförmiges Dickenprofil auf.

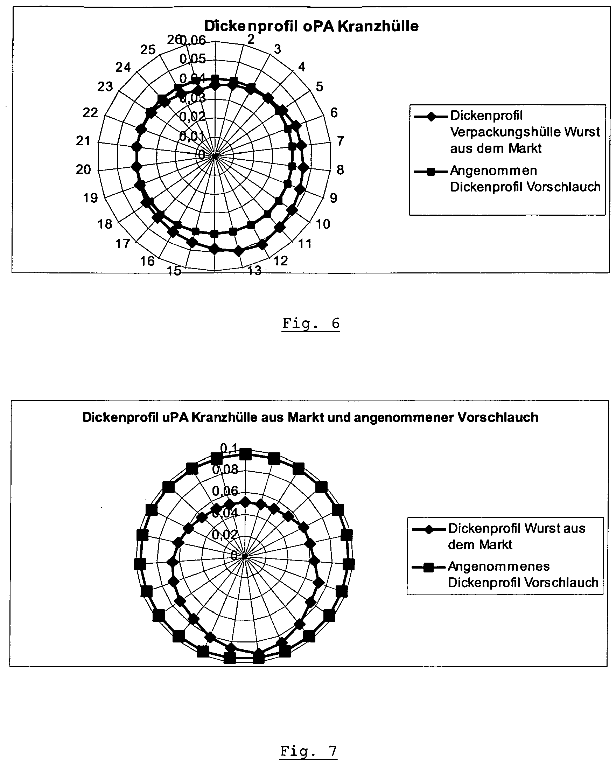

Der Vorschlauch (Figur 6, Reihe 2) hat immer ein gleichförmiges Dickenprofil. Die Wandstärken sind immer nahezu gleich.

Die Wandstärke am Kranzaußendurchmesser ist hingegen immer dünner als die Wandstärke am Kranzinnendurchmesser. Dies ist in Figur 6 in Reihe 1 dargestellt. Dieses Dickenprofil entsteht durch Schrumpfen auf der Kranzinnenseite und Stecken auf der Kranzaußenseite im Kranzverfahren beim Kranzen von oPA-Hüllen nach dem Stand der Technik.

Weitere bekannte Kranzhüllen oder Kranzdärme sind die folgenden, die hier nur der Vollständigkeit halber erwähnt werden:

### Naturkranzdarm

Kranzdarm aus Kollagen / wird in Kranzform extrudiert / Material Hautspalt

Cellulosekranzdarm / wird in Kranzform extrudiert / Material Cellulose)

Beim Kranzen von uPA Hüllen (beschrieben im Patent EP 1438177B1) entsteht ein ähnliches Dickenprofil. Durch Verstrecken des gesamten Vorschlauches wird das Dickenprofil zwar insgesamt kleiner (Dickenprofil Vorschlauch), berührt aber die typische Dickenverteilung der Wandstärke nicht, bei der der Kranzaußendurchmesser eine dünnere Wandung als die Wandstärke am Kranzinnendurchmesser aufweist.

Allgemein ist dieses auch bei der Herstellung von oPA Kranzdärmen möglich (Dickenprofil Vorschlauch ist größer als Dickenprofil Kranzdarm).

Problematisch ist bei Kranzhüllen mit nicht gleichförmiger Wandstärke, dass z.B. beim Räuchern des Wurstproduktes der Rauch auf der Innenseite weniger stark in das Produkt eindringt als auf der dünneren Außenseite. Eine Kranzhülle mit ungleichmäßigen Eigenschaften entsteht.

Es ist deshalb Aufgabe der vorliegenden Erfindung, eine Kranzhülle oder einen Kranzdarm zu schaffen, der eine im wesentlichen gleichförmige Wandstärke aufweist, sowie ein Herstellungsverfahren hierfür anzugeben.

Die Voraussetzung zur Lösung dieser Aufgabe besteht darin, dass bei einer Kranzhülle für Wurstwaren aus einem unter Wärmeeinwirkung schrumpffähigen schlauchförmigen Hüllenmaterial die Außenseite der Kranzhülle in Umfangsrichtung des Hüllenmaterials geschrumpft ist, während die Innenseite der Kranzhülle in Längsrichtung des Hüllenmaterials geschrumpft ist, so dass sich eine im wesentlichen gleichförmige Wandstärke der Kranzhülle ergibt.

Entsprechend ist ein Verfahren mit den folgenden Schritten vorgesehen:
- Schrumpfen des Hüllenmaterials in einem ersten streifenförmigen Bereich bei langgestrecktem Hüllenmaterial, Wickeln des Hüllenmaterials in eine Schraubenform, wobei der streifenförmige Bereich außen liegt,
- Schrumpfen des Hüllenmaterials in einem zweiten streifenförmigen Bereich, wobei der zweite Bereich dem ersten Bereich gegenüber liegt und in der Schraubenform innen liegt.

Bei nicht schrumpffähigem Hüllenmaterial aus uPa wird die Aufgabe dadurch gelöst, dass das Material zunächst in einem streifenförmigen Bereich, der später die Innenseite des Kranzes darstellt, in Umfangsrichtung verstreckt, so dass dort die Wandstärke verringert wird. Beim Kranzen wird dann die Außenseite in Längsrichtung verstreckt, so dass sich die Krümmung des Hüllenmaterials ergibt und sich die Wandstärke dort gleichzeitig verringert. Durch diesen Schritt ergibt sich dann eine im wesentlichen gleichförmige Wandstärke über den gesamten Umfang des Hüllenmaterials.

Die so bearbeitete Hülle kann auch insgesamt noch in der Längsrichtung verstreckt werden, so dass sich eine verkranzte Hülle mit größerer nutzbarer Länge ergibt, die über eine insgesamt gegenüber dem Ausgangsmaterial verringerte Wandstärke verfügt.

Bei der Erfindung wird der Vorschlauch (oPA Hülle) in einem weiteren vorgeschalteten Verfahrensschritt thermoplastisch verformt, so dass der behandelte Vorschlauch das gleiche Dickenprofil wie das Dickenprofil der Kranzhülle (Figur 6 Reihe2) aufweist. Zu diesem Zweck wird der langgestreckte Vorschlauch auf einer Seite in Längsrichtung linear mit Wärme beaufschlagt, so dass er dort linienförmig schrumpft, aber keine Krümmung erfährt.

Wird dann der behandelte Vorschlauch mit der dickeren, thermisch vorbehandelten Seite außenliegend (Kranzaußenseite) verkranzt, so entsteht nach dem Verkranzen durch Wärmezufuhr an der Innenseite ein gleichmäßiges Dickenprofil wie bei einem unbehandeltem Vorschlauch.

Bei oPA Hüllen wird geschrumpft (verschiedene Verfahren sind möglich / mit heißer Luft / durch Profilheizwalzen / durch Keramikstrahler uvm.).

Bei uPA Hüllen wird verstreckt mit Luftdruck von innen und thermoplastischer Verformung von außen. Mittels Wärmeringdüse und der Wärmebehandlung innen und außen wird der gesamte Vorschlauch größer als 5% verstreckt, vorzugsweise größer als 25% und besonders bevorzugt sogar größer 50%. Verschiedene Verfahren sind möglich, beispielsweise mit heißer Luft, durch Profilheizwalzen, mittels Keramikstrahlern und dergleichen.

Auch ist das Herstellen eines solchen Kranzdarmes aus Folie vorstellbar. Hierbei wird die Folie zu einem Schlauch gesiegelt (verschiedene Verfahren), wie oben beschrieben vorbehandelt und dann gekranzt.

Das Dickenprofil kann an Endprodukten kontrolliert werden.

Folgende Vorteile ergeben sich:
Bei gleichmäßiger Folienwandstärke sind Hüllen- und Folieneigenschaften wie Barriere (Wasserdampfdurchlässigkeit) gleich.

Wesentliche Folieneigenschaften sind hierbei Rauchdurchlässigkeit, Barriere, UV Lichtdurchlässigkeit usw..
- Fig.1:: eine Draufsicht auf eine schematisch dargestellte Vorrichtung zum Kranzen von Schlauchhüllen nach der Erfindung,
- Fig. 2:: eine Seitenansicht einer Abwickelrolle der Vorrichtung nach Fig. 1,
- Fig. 3:: eine Draufsicht auf ein schematisch dargestelltes Kranzwerkzeug der Vorrichtung nach Fig. 1,
- Fig. 4:: eine Schnittansicht durch das Kranzwerkzeug nach Fig. 3,
- Fig. 5:: eine Draufsicht auf eine Kranzhülle;
- Fig. 6:: Dickenprofile des unbearbeiteten Hüllenmaterials und des fertigen Produktes nach dem Stand der Technik;
- Fig. 7:: Dickenprofile des unbearbeiteten Hüllenmaterials und des fertigen Produktes gemessen an einem im Handel befindlichen Produkt; sowie
- Fig. 8:: Dickenprofile des unbearbeiteten Hüllenmaterials, des Zwischenprodukts und des fertigen Produktes nach der Erfindung.

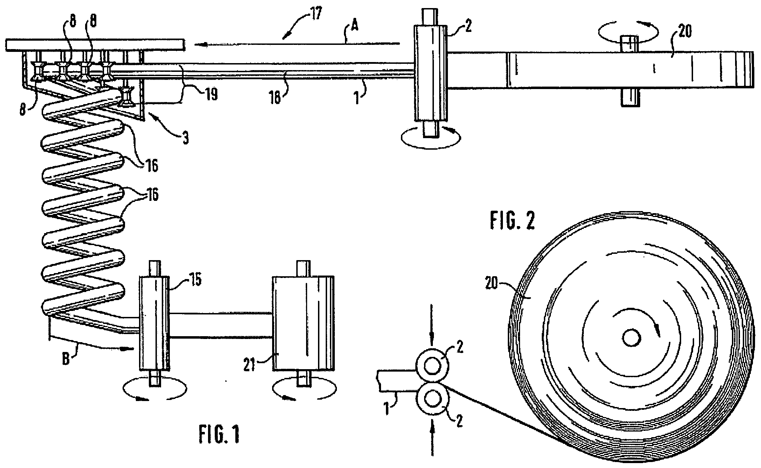

Eine in Fig. 1 schematisch dargestellte Vorrichtung 17 zum kontinuierlichen Kranzen von thermoplastischen, schrumpffähigen Schlauchhüllen besteht aus einer Abwickelrolle 20, einem ersten Quetschwalzenpaar 2, einem Kranzwerkzeug 3, einem zweiten Quetschwalzenpaar 15 und einer Aufwickelrolle 21. Eine Schlauchhülle 1 ist auf die Abwickelrolle 20 gewickelt, die im Uhrzeigersinn sich während des Abwickelns der Schlauchhülle 1 dreht, wie aus Fig. 2 zu ersehen ist. Zu Beginn des Abwickelns wird die zusammengefaltete Schlauchhülle 1 durch das erste Quetschwalzenpaar 2 hindurchgeführt, das aus zwei Walzen bzw. Rollen besteht, die entsprechend den Pfeilrichtungen in Fig. 2 gegeneinander gedrückt werden. Nachdem eine vorgegebene Länge der Schlauchhülle 1 durch das erste Quetschwalzenpaar 2 hindurchgelaufen ist, wird dieser Abschnitt der Schlauchhülle 1 mit einem Gas, insbesondere mit Luft mit einem entsprechenden Überdruck aufgefüllt und das offene Ende der Schlauchhülle 1 beispielsweise durch einen Clip verschlossen. In der Schlauchhülle 1 befindet sich dann eine Gasblase 18, die sich über die Länge der Einlaufstrecke von dem ersten Quetschwalzenpaar 2 bis zu dem mit einem Clip verschlossenen Ende der Schlauchhülle 1 erstreckt. Die Schlauchhülle 1 wird dann in das Kranzwerkzeug eingeführt. Die aufgeblasene Schlauchhülle 1 durchläuft das Kranzwerkzeug und wird in diesem zu einer Kranzhülle 16 geformt, wie nachstehend noch näher beschrieben werden wird. Der Druck der Gasblase 18 kann durch Verfahren des ersten Quetschwalzenpaares entlang der Einlaufstrecke A verändert werden, da die in der Schlauchhülle 1 eingeschlossene Gasmenge je nach der Stellung des Quetschwalzenpaares 2 auf einen längeren oder kürzeren Schlauchhüllenabschnitt verteilt wird. Die Kranzhülle 16 bewegt sich durch eine Auslaufstrecke B, die parallel zu der Einlaufstrecke A ist und durchläuft das zweite Quetschwalzenpaar 15, das ortsfest angeordnet ist. Die Gasblase 18 ist somit in der Schlauchhülle 1 bzw. in der Kranzhülle 16 zwischen dem ersten und dem zweiten Quetschwalzenpaar 2 bzw. 15 eingeschlossen. Durch das Abquetschen der vorgegebenen Gasmenge bzw. Luftmenge durch das zweite Quetschwalzenpaar 15 ist sichergestellt, dass stets ein ausreichender Gasüberdruck für den Kranzvorgang aufrechterhalten bleibt. Durch diese Verfahrensweise wird die Gasmenge nicht mehr in kleinen Kranzeinheiten abgeführt, wie dies bei den bekannten Verfahren der Fall ist, die es erforderlich machen, stets neues Gas in die Schlauchhülle einzublasen. Die Gasblase 18 bzw. das Gaspolster bleibt also während des Kranzens zwischen den beiden Quetschwalzenpaaren 2 und 15 komplett über die gesamte Länge der Schlauch- bzw. der Kranzhülle erhalten. Beim Durchgang der Kranzhülle 16 durch das zweite Quetschwalzenpaar 15 wird die Kranzhülle 16 flach zusammengedrückt und kann dann problemlose auf die Aufwickelrolle 21 aufgewickelt werden, um anschließend durch bekannte Rafftechniken weiterverarbeitet zu werden.

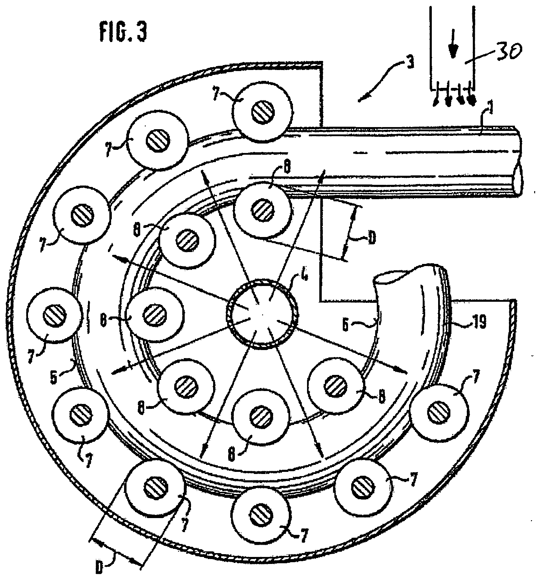

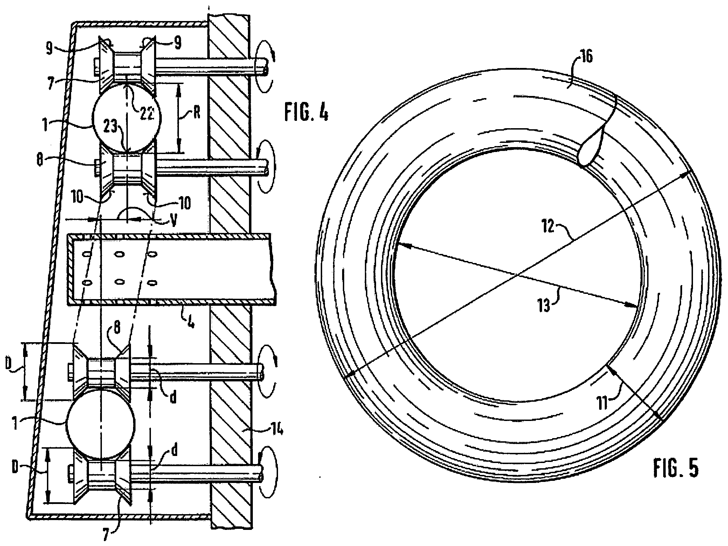

In Fig. 3 ist schematisch das Kranzwerkzeug 3 gezeigt, das als eine Wendel 19 ausgebildet ist. Entlang der Wendel 19 sind Führungsrollen bzw. -röllchen 7 und 8 angeordnet. Die Wendel 19 erstreckt sich beispielsweise über einen Dreiviertelumfang des Kranzwerkzeuges 3. An einer Außenseite der aufgeblasenen Schlauchhülle 1 liegen die Führungsrollen 7 an, während eine Innenseite 6 der Schlauchhülle von den Führungsrollen 8 tangiert wird. Im Inneren der Wendel 19 befindet sich eine Einrichtung 4, bei der es sich beispielsweise um ein Heißluftgebläse oder einen Wärmestrahler handelt, von dem radial Wärme in Richtung der Innenseite 6 der Schlauchhülle 1 abgegeben wird. Die auf die Innenseite 6 auftreffende Wärme führt zu einem Schrumpfen der Schlauchhülle 1 auf der Innenseite 6, so dass die zu Beginn geradlinige Schlauchhülle 1 sich wendel-, spiral- bzw. ringförmig krümmt, wobei die Außenseite 5 der Schlauchhülle weniger stark als die Innenseite 6 erwärmt wird. Zumindest zwei Paare von Führungsrollen 7 und 8, wobei sich diese Führungsrollen jeweils diametral gegenüberlegen, sind angetrieben. Dabei laufen die an der Außenseite 5 der Schlauchhülle 1 anliegenden und angetriebenen beiden Führungsrollen 7 mit höherer Geschwindigkeit um als die an der Innenseite 6 der Schlauchhülle 1 anliegenden beiden Führungsrollen 8. Die Anzahl der Führungsrollen 7 an der Außenseite 5 der Schlauchhülle 1 ist im allgemeinen größer als die Anzahl an der Innenseite 6. Das erste Paar von angetriebenen Führungsrollen 7 und 8 befindet sich am Beginn der Wendelstrecke im Kranzwerkzeug 3, während das zweite Paar von angetriebenen Führungsrollen 7 und 8 dem ersten Paar auf dem halben Wendelumfang gegenüberliegt und, wie aus Fig. 4 ersichtlich ist, ein horizontaler Versatz V zwischen den Mittellinien der beiden Paare von Führungsrollen vorhanden ist.

Wie aus Fig. 4 zu ersehen ist, umgibt das Kranzwerkzeug 3 ein Gehäuse 14, das als Heißlufttunnel die Führungsrollen 7 an der Außenseite 5 der Schlauchhülle 1 umschließt. Die von der Einrichtung 4 abgegebene Konvektions- bzw. Strahlungswärme erwärmt die Schlauchhülle 1, die entlang der Wendel 19 geführt ist, wobei die für die Erwärmung der Innenseite 6 der Schlauchhülle 1 herangeführte Heißluft gleichmäßig über den Umfang der Schlauchhülle verteilt wird. Diese Heißluft wird in dem Heißlufttunnel gehalten, so dass sich eine vorgegebene Temperaturverteilung rings um die Schlauchhülle 1 herum einstellt, bei der die Innenseite 6 stärker als die Außenseite 5 der Schlauchhülle 1 erwärmt wird. Der Gasüberdruck in der Schlauchhülle 1 vor dem Einlaufen in das Kranzwerkzeug 3 kann durch Verkürzung oder Verlängerung des mit Gas gefüllten Schlauchhüllen- bzw. Kranzhüllenabschnittes zwischen den beiden Quetschwalzenpaaren 2 und 15 eingestellt werden. Die Länge dieses Abschnittes wird durch Verfahren des ersten Quetschwalzenpaares 2 entlang der Einlaufstrecke A verändert. Die Gasblase 18 in der Kranzhülle 16 wird vor deren Aufwickelung auf die Aufwickelrolle 21 abgequetscht, so dass das in dem Abschnitt der Kranzhülle 16 bzw. der Schlauchhülle 1 zwischen den beiden Quetschwalzenpaaren 2 und 15 vorhandene Gas eingeschlossen bleibt. Aus der nach dem Passieren des zweiten Quetschwalzenpaares 15 weiterlaufenden Kranzhülle 16 wird das Gas herausgequetscht und die weiterlaufende Kranzhülle wird entlang ihrer Kranzmittellinie flachgelegt und aufgewickelt.

Wie aus Fig. 4 ersichtlich ist, sind die Führungsrollen 7 und 8 gekehlt und weisen schräg verlaufende Innenflanken 9 bzw. 10 auf. Sowohl die Führungsrollen 7 als auch die Führungsrollen 8 besitzen jeweils einen Außendurchmesser D und einen Innendurchmesser d, wobei die Innendurchmesser d und die Außendurchmesser D der Führungsrollen 7 und 8 jeweils gleichgroß sind. In einer nicht gezeigten, weiteren Ausführungsform können die Führungsrollen 7 an der Außenseite 5 der Schlauchhülle 1 größere Außendurchmesser D haben als die Führungsrollen 8 an der Innenseite 6 der Schlauchhülle 1. Der Mittenabstand R zwischen zwei Führungsrollen 7 und 8 eines angetriebenen Rollenpaares legt ein Kranzkaliber 11 der Kranzhülle 16 (vergleiche Fig. 5) fest. Die schrägen Innenflanken 9 bzw. 10 schließen an je eine Innenumfangsfläche 22 der Führungsrolle 7 bzw. eine Innenumfangsfläche 23 der Führungsrolle 8 an. Der Mittenabstand R ist gleich dem Abstand zwischen den Mitten der Innenumfangsflächen 22 und 23 der beiden Führungsrollen 7 und 8.

Fig. 5 zeigt eine Draufsicht auf die Kranzhülle 16, die das Kranzkaliber 11 hat, das wie voranstehend ausgeführt ist, durch den Abstand zwischen den Führungsrollen 7 und 8 der beiden angetriebenen Rollenpaare festgelegt ist. Ein Kranzinnendurchmesser 13 wird durch die Führungsrollen 8 an der Innenseite 6 der Schlauchhülle 1 bzw. durch den Krümmungsinnenradius der Wendel 19 festgelegt, während ein Kranzaußendurchmesser 12 durch die Führungsrollen 7 an der Außenseite 5 der Schlauchhülle 1 bzw. durch den Außendurchmesser der Wendel vorgegeben ist. Das Kranzkaliber beträgt beispielsweise 20 - 70 mm und der Kranzinnendurchmesser 13 liegt im Bereich von 30 - 300 mm.

Die in den Figuren 1 bis 5 dargestellte Vorrichtung entspricht im wesentlichen dem Stand der Technik. In der Figur 3 ist mit der Ziffer 30 eine zusätzliche Heißluftdüse bezeichnet, die den durchlaufenden Schlauch streifenförmig erhitzt und dadurch ein Schrumpfen bewirkt, das zu einer erhöhten Wandstärke führt. Da der Schlauch hier langgestreckt vorliegt, erfolgt die Schrumpfung in Umfangsrichtung, also ohne Krümmung des Schlauchs. Dieser Bereich liegt beim Kranzen außen.

Das Kranzen wird ebenfalls mit Heißluft durchgeführt, die aus der mittig angeordneten Düse 4 strömt. Dadurch schrumpft der Schlauch innen und nimmt die Kranzform an, da das Schrumpfen aufgrund der Führung in der Vorrichtung hier in Längsrichtung des Schlauchs erfolgt. Die nun auch innen zunehmende Wandstärke gleicht sich der außen durch die Düse 30 erzeugten Wandstärke an, so dass der Kranz insgesamt nahezu oder ganz gleichförmige Wandstärke aufweist.

Die Übergangsbereiche zwischen der Innenseite und der Außenseite werden durch die vorbei streichende Heißluft ebenfalls geschrumpft, so dass sich auch hier die gewünschte Wandstärke einstellt.

Der erste Bearbeitungsschritt kann auch an anderer Stelle vor dem Kranzen erfolgen.

In den Figuren 6 und 7 sind Messungen an konventionellen Kranzhüllen dargestellt, die die unterschiedliche Dicke des Materials über den Umfang zeigen.

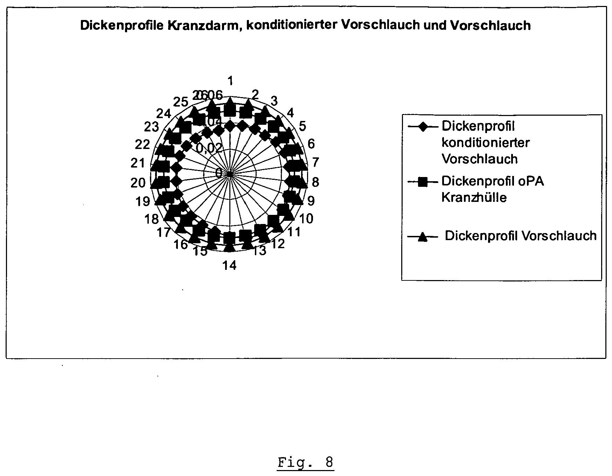

Die Figur 8 zeigt Messungen an einer erfindungsgemäßen Kranzhülle, und zwar an dem Ausgangsmaterial, dem Zwischenprodukt nach dem ersten Schrumpfen an der Düse 30, sowie dem Endprodukt. Es werden nachfolgend noch drei Herstellungsbeispiele beschrieben, die zu einem Produkt mit einem Dickenverlauf nach Figur 8 führen.

### Beispiel 1

Aus einer schrumpffähigen oder versteckfähigen Polymerhülle mit gleichmäßigem Dickenprofil von 55 µm wurde in einem ersten Schritt durch Wärmebehandlung einseitig geschrumpft. Es entstand ein Schlauch mit einem Dickenprofil Wandstärke oben ca. 35 µm und innen 52 µm. Dieser konditionierte Schlauch wurde dann mit der dicken Seite oben liegend (Kranzaußenseite) verkranzt. Es entstand ein Kranz mit einem nahezu gleichen Dickenprofil von ca. 48 µm bis 49 µm außen wie innen (Kranzinnenseite wie Kranzaußenseite). Der konditionierte Vorschlauch wurde der Länge nach verstreckt, so dass ein durchschnittlich kleineres Dickenprofil entstand.

### Beispiel 2

Aus einer schrumpffähigen oder versteckfähigen Polymerhülle mit gleichmäßigem Dickenprofil von 55 µm wurde in einem ersten Schritt durch Wärmebehandlung einseitig geschrumpft. Es entstand ein Schlauch mit einem Dickenprofil Wandstärke oben ca. 55 µm und innen 72 µm. Dieser konditionierte Schlauch wurde dann mit der dicken Seite oben liegend (Kranzaußenseite) verkranzt. Es entstand ein Kranz mit einem nahezu gleichen Dickenprofil von ca. 58 µm bis 59 µm außen wie innen (Kranzinnenseite wie Kranzaußenseite). Der konditionierte Vorschlauch wurde der Länge nach geschrumpft, so dass ein durchschnittlich größeres Dickenprofil entstand.

### Beispiel 3

Aus einer schrumpffähigen oder versteckfähigen Polymerhülle mit gleichmäßigem Dickenprofil von 55 µm, wurde in einem ersten Schritt durch Wärmebehandlung einseitig geschrumpft. Es entstand ein Schlauch mit einem Dickenprofil Wandstärke oben ca. 65 µm und innen 55 µm. Dieser konditionierte Schlauch wurde dann mit der dicken Seite oben liegend (Kranzaußenseite) verkranzt. Es entstand ein Kranz mit einem nahezu gleichen Dickenprofil von ca. 54 µm bis 55 µm außen wie innen (Kranzinnenseite wie Kranzaußenseite). Der konditionierte Vorschlauch wurde der Länge nach neutral verkranzt, so dass ein durchschnittlich größeres Dickenprofil entstand.

### Beispiel 4

Aus einer nicht schrumpffähigen und unverstreckten Polymerhülle (uPA-Hülle) mit einem gleichmäßigen Dickenprofil von 60µm wurde in einem ersten Schritt durch Wärmebehandlung einseitig verstreckt. Es entstand ein Schlauch mit einem Dickenprofil mit einer von Wandstärke ca. 50µm an der dünneren Seite und ca. 60µm an der dickeren Seite. Der so konditionierte Schlauch wurde dann mit der dünnen Seite innen liegend verkranzt. Dabei wurde die außen liegende dickere Seite durch Wärmebehandlung und thermoplastische Verformung so verstreckt, dass ein mehr als 5% verstreckter Kranz entstand mit einem nahezu gleichförmigen Dickenprofil von ca. 38µm bis 42µm außen wie innen (Kranzinnenseite wie Kranzaußenseite). Der konditionierte Vorschlauch wurde insgesamt der Länge nach verstreckt (größer 5%), so dass ein durchschnittlich kleineres Dickenprofil entstand.

## Patentansprüche

1. Kranzhülle (16) für Wurstwaren, mit einer Kranzinnenseite und mit einer Kranzaußenseite, und mit einem unter Wärmeeinwirkung schrumpffähigen oder verstreckfähigen schlauchförmigen Hüllenmaterial (1), d a **durch gekennzeichnet**, dass bei Kranzhüllen (16) aus orientiertem Polyamid die Kranzaußenseite in Umfangsrichtung des Hüllenmaterials geschrumpft ist, während die Kranzinnenseite in Längsrichtung des Hüllenmaterials geschrumpft ist, so dass sich eine im wesentlichen gleichförmige Wandstärke der Kranzhülle (16) ergibt, und dass bei Kranzhüllen (16) aus unverstrecktem Polyamid die Kranzinnenseite in Umfangsrichtung verstreckt ist und die Kranzaußenseite in Längsrichtung des Hüllenmaterials (1) verstreckt ist,
so dass sich eine im wesentlichen gleichförmige Wandstärke der Kranzhülle ergibt.

2. Kranzhülle nach Anspruch 1, **dadurch gekennzeichnet, dass** die Hüllen (1) zusätzlich der Länge nach geschrumpft, verstreckt oder gedehnt ist.

3. Verfahren zur Herstellung einer Kranzhülle (16) aus orientiertem Polyamid, insbesondere nach Anspruch 1, **dadurch gekennzeichnet, dass** folgende Schritte vorgesehen sind:
- Schrumpfen des Hüllenmaterials (1) in einem ersten streifenförmigen Bereich bei langgestrecktem Hüllenmaterial,
Wickeln des Hüllenmaterials (1) in eine Schraubenform, wobei der streifenförmige Bereich außen liegt,
- Schrumpfen des Hüllenmaterials (1) in einem zweiten streifenförmigen Bereich, wobei der zweite Bereich dem ersten Bereich gegenüber liegt und in der Schraubenform innen liegt.

4. Verfahren zur Herstellung einer Kranzhülle (16) aus unverstrecktem Polyamid, insbesondere nach Anspruch 1,
**dadurch gekennzeichnet, dass** folgende Schritte vorgesehen sind:
- Verstrecken des Hüllenmaterials (1) in einem ersten streifenförmigen Bereich bei langgestrecktem Hüllenmaterial,
Wickeln des Hüllenmaterials (1) in eine Schraubenform, wobei der streifenförmige Bereich innen liegt,
- Verstrecken des Hüllenmaterials (1) in einem zweiten streifenförmigen Bereich, wobei der zweite Bereich dem ersten Bereich gegenüber liegt und in der Schraubenform außen liegt.

## Claims

1. Tubular casing (16) for sausage products, having a tubular inner side and having a tubular outer side, and having a tubular casing material (1) which is shrinkable or stretchable by exposure to heat, **characterised in that** with tubular casings (16) consisting of oriented polyamide the tubular outer side is shrunk in the circumferential direction of the casing material, whilst the tubular inner side is shrunk in the longitudinal direction of the casing material, so that an essentially uniform wall thickness of the tubular casing (16) results, and **in that** with tubular casings (16) consisting of unstretched polyamide the tubular inner side is stretched in the circumferential direction and the tubular outer side is stretched in the longitudinal direction of the casing material (1), so that an essentially uniform wall thickness of the tubular casing results.

2. Tubular casing according to Claim 1, **characterised in that** the casings (1) are additionally shrunk, stretched or extended lengthways.

3. Method for producing a tubular casing (16) from oriented polyamide, in particular according to Claim 1, **characterised in that** the following steps are provided:
- shrinking the casing material (1) in a first strip-like area with elongated casing material,
coiling the casing material (1) into a spiral shape, wherein the strip-like area is on the outside,
- shrinking the casing material (1) in a second strip-like area, wherein the second area faces the first area and is on the inside in the spiral shape.

4. Method for producing a tubular casing (16) from unstretched polyamide, in particular according to Claim 1, **characterised in that** the following steps are provided:
- stretching the casing material (1) in a first strip-like area with elongated casing material,
coiling the casing material (1) into a spiral shape, wherein the strip-like area is on the inside,
- stretching the casing material (1) in a second strip-like area, wherein the second area faces the first area and is on the outside in the spiral shape.

## Revendications

1. Enveloppe en couronne (16) pour charcuteries, comprenant un côté intérieur de couronne et un côté extérieur de couronne, ainsi qu'un matériau d'enveloppe (1) tubulaire rétractable ou étirable sous l'effet de la chaleur, **caractérisée en ce que** dans le cas des enveloppes en couronne (16) en polyamide orienté, le côté extérieur de couronne est rétracté dans le sens de la circonférence du matériau d'enveloppe, alors que le côté intérieur de couronne est rétracté dans le sens longitudinal du matériau d'enveloppe, de sorte qu'il se produit une épaisseur de paroi sensiblement uniforme de l'enveloppe en couronne (16), et **en ce que** dans le cas des enveloppes en couronne (16) en polyamide non étiré, le côté intérieur de couronne est étiré dans le sens de la circonférence et le côté extérieur de couronne est étiré dans le sens longitudinal du matériau d'enveloppe (1),
de sorte qu'il se produit une épaisseur de paroi sensiblement uniforme de l'enveloppe en couronne.

2. Enveloppe en couronne selon la revendication 1, **caractérisée en ce que** l'enveloppe (1) est en plus rétractée, étirée ou allongée dans le sens de la longueur.

3. Procédé de fabrication d'une enveloppe en couronne (16) en polyamide orienté, notamment selon la revendication 1, **caractérisé en ce qu'**il comprend les étapes suivantes :
- rétreint du matériau d'enveloppe (1) dans une première zone en forme de bande dans le cas d'un matériau d'enveloppe étiré en longueur,
- enroulement du matériau d'enveloppe (1) en forme d'hélice, la zone en forme de bande se trouvant à l'extérieur,
- rétreint du matériau d'enveloppe (1) dans une deuxième zone en forme de bande, la deuxième zone se trouvant à l'opposé de la première zone et se trouvant à l'intérieur dans la forme d'hélice.

4. Procédé de fabrication d'une enveloppe en couronne (16) en polyamide orienté, notamment selon la revendication 1, **caractérisé en ce qu'**il comprend les étapes suivantes :
- étirement du matériau d'enveloppe (1) dans une première zone en forme de bande dans le cas d'un matériau d'enveloppe étiré en longueur,
- enroulement du matériau d'enveloppe (1) en forme d'hélice, la zone en forme de bande se trouvant à l'intérieur,
- étirement du matériau d'enveloppe (1) dans une deuxième zone en forme de bande, la deuxième zone se trouvant à l'opposé de la première zone et se trouvant à l'extérieur dans la forme d'hélice.
